# EUROPÄISCHE PATENTSCHRIFT

(11) **EP 3 256 280 B1**
(45) Veröffentlichungstag und Bekanntmachung des Hinweises auf die Patenterteilung: **12.12.2018**
(21) Anmeldenummer: 16704182.1
(22) Anmeldetag: 10.02.2016
(51) Int. Cl.: B23B 51/06

(54) **EINLIPPEN-TIEFLOCHBOHRER**
GUN DRILL
FORET À CANON

(30) Priorität: 13.02.2015 DE 202015001069 U
(43) Veröffentlichungstag der Anmeldung: 20.12.2017
(73) Patentinhaber: Botek Präzisionsbohrtechnik GmbH, 72585 Riederich (DE)
(72) Erfinder: DEEG, Juergen, 72555 Metzingen (DE)
(74) Vertreter: DREISS Patentanwälte PartG mbB
(86) Internationale Anmeldenummer: PCT/EP2016/052823
(87) Internationale Veröffentlichungsnummer: WO 2016/128462

(56) Entgegenhaltungen:
- DE-A1- 3 314 718
- JP-A- S6 234 712

## Beschreibung

Die vorliegende Erfindung betrifft einen Einlippen-Tieflochbohrer, der besonders zum Zerspanen von langspanenden Werkstoffen geeignet ist.

Einlippen-Tieflochbohrer, nachfolgend auch als Einlippenbohrer bezeichnet, sind in den verschiedensten Ausführungen aus dem Stand der Technik bekannt. Exemplarisch sei dabei auf die VDI-Richtlinien 3210 und 3208 sowie die DE 10 2012 016 660 A1, die die Merkmale des Oberbegriffs des Anspruchs 1 offenbart, der Anmelderin verwiesen. Grundsätzlich ist man immer bestrebt, Leistungsfähigkeit, Bearbeitungsgenauigkeit und Prozesssicherheit der Tieflochbohrer zu verbessern. Letzteres erfordert einen kurzen Span, um einen Abtransport der Späne aus der Bohrung zu gewährleisten. Außerdem soll die Schnittkraft bzw. die zum Bohren erforderliche Energie minimiert werden, um den Bohrerschaft zu entlasten und die Energiekosten zu reduzieren. In der Einleitung der DE 10 2012 016 660 A1 werden Einlippen-Tieflochbohrer und deren Besonderheiten beschrieben.

Aus der DE 33 14 718 A1 ist ein Einlippenbohrer bekannt, der eine Sicke aufweist, die im Querschnitt kreissegmentförmig ist.

Aus der JP 62-34712 A ist ein Einlippenbohrer bekannt, dessen Spanformfläche relativ komplex gestaltet ist. Insbesondere umfasst diese Spanformfläche zwei Abschnitte, wobei der radial innenliegende Abschnitt durch eine im Querschnitt dreieckige Nut von einer Wand einer Sicke abgesetzt ist. Detaillierte Angaben zu der Spanfläche enthält diese Druckschrift nicht.

Wie bereits aus der DE 10 2012 016 660 A1 bekannt, beträgt der Spanwinkel von Einlippen-Tieflochbohrern üblicherweise 0°. Aus dem Stand der Technik sind auch Einlippen-Tieflochbohrer mit einem Spanwinkel > 0° bekannt. Ein Spanwinkel von 0°hat unter anderem den Vorteil, dass er durch Schleifen einfach zu erzeugen ist. Allerdings treten beim Zerspanen vergleichsweise hohe Schnittkräfte auf. Das kann dazu führen, dass die Bohrung seitlich ausweicht. Diese seitliche Abweichung wird auch als "Bohrungsverlauf" bezeichnet.

Zudem kann die Spanformung und somit auch die Spanlänge nur bedingt beeinflusst werden. Beim Zerspanen von langspanenden Werkstoffen, wie beispielsweise hochwertigem und damit auch zähem Stahl, führt dies speziell bei hohen Vorschüben zu Problemen und limitiert somit die Produktivität. Dies gilt insbesondere bei Bohrungen mit einem hohen Verhältnis von Länge zu Durchmesser.

Sollen in langspanende Werkstoffe tiefe Bohrungen eingebracht werden, so entspricht es dem Stand der Technik, Spanteiler und/oder Spanformer am Werkzeug anzubringen, um die Spangröße zu minimieren und somit eine prozesssicheren Spanabtransport aus der Bohrung zu gewährleisten. Spanteiler weisen eine unterbrochene oder gewölbte Schneidkante auf. Dies hat den Nachteil einer aufwendigen Werkzeugfertigung. Weil der Grund der Bohrung immer ein Abbild der Schneide darstellt, hat der Bohrgrund bei Einlippen-Tieflochbohrern mit Spanteiler eine unterbrochene und/oder gewölbte Form. Dies ist oft unerwünscht.

Spanformer verursachen in der Regel einen Anstieg der Vorschub- und Schnittkräfte, die den Bohrungsverlauf negativ beeinflussen können.

Es ist daher Aufgabe der vorliegenden Erfindung, einen Einlippen-Tieflochbohrer bereitzustellen, der einerseits einen kurzen Span erzeugt und somit auch bei hohen Vorschüben die Prozesssicherheit gewährleistet. Zudem sollen die bei der Zerspanung auf den Bohrkopf wirkenden Kräfte und Momente gering sein, um das Verlaufen der Bohrung zu minimieren und einen hohen Standweg zu gewährleisten.

Darüber hinaus soll die zum Bohren erforderliche Antriebsleistung gering sein und der erfindungsgemäße Einlippen-Tieflochbohrer relativ einfach herstellbar und nachschleifbar sein.

Diese Aufgabe wird bei einem Einlippen-Tieflochbohrer mit den Merkmalen des Anspruchs 1 gelöst.

Die erfindungsgemäße Spanformfläche ist eben, hat jedoch bezogen auf die Spanfläche zwei unterschiedliche Plateaus. Der erste Abschnitt, der radial weiter innen liegt, hat ein Plateau, das weiter über der Spanfläche liegt als der zweite Abschnitt, der radial weiter außen an dem Bohrkopf ausgebildet ist. Diese erfindungsgemäße Ausgestaltung der Spanformfläche hat mehrere positive Effekte:
Die erfindungsgemäß abgestufte Spanformfläche ist relativ einfach durch Schleifen herstellbar, weil der erste Abschnitt und der zweite Abschnitt ebene Flächen sind, die sich nebeneinander in Richtung der Drehachse erstrecken. Diese beiden Abschnitte können, falls gewünscht, sogar in einem Schleifvorgang mit einer konturierten Schleifscheibe hergestellt werden.

Darüber hinaus ist der Absatz zwischen der Spanfläche und dem außenliegenden zweiten Abschnitt der Spanformfläche relativ niedrig, so dass der von der Außenschneide in diesem radial äußeren Bereich erzeugte Span an diesem Absatz leicht angehoben wird. Die dazu erforderliche Antriebsleistung ist relativ gering, obwohl der zweite Abschnitt radial außen angeordnet ist. Infolgedessen ist auch die daraus resultierende Torsions- und Biegebeanspruchung sowie die benötigte Antriebsleistung des erfindungsgemäßen Einlippen-Tieflochbohrers relativ gering. Dies wirkt sich positiv auf die Geradheit der Bohrung und die Vorschubgeschwindigkeit aus.

Der Absatz zwischen Spanfläche und dem ersten Abschnitt, der radial weiter innen angeordnet ist, ist deutlich höher, so dass hier eine erhebliche Umformarbeit an dem Span erfolgt, die zum Brechen des Spans führt. Trotzdem ist das daraus resultierende Moment relativ gering, weil sich der erste Abschnitt in unmittelbarer Nähe der Drehachse des Bohrkopfs befindet.

Die voneinander und von der Spanfläche abgesetzten Plateaus der Spanformfläche in dem ersten Abschnitt und dem zweiten Abschnitt bewirken außerdem, dass der Span in Richtung der zweiten Wand der Sicke umgelenkt wird. Beim Auftreffen auf diese Wand wird der Span nochmals plastisch verformt, so dass er schließlich in die gewünscht kurzen Stücke bricht.

Es ergeben sich dadurch ein sehr kurz brechender Span, eine niedrige Schnittkraft und eine hohe Leistungsfähigkeit des erfindungsgemäßen Einlippen-Tieflochbohrers. Außerdem ist der erfindungsgemäße Einlippen-Tieflochbohrer relativ einfach herstellbar. Dies ist auch dadurch bedingt, dass die Spanformfläche aus nebeneinander angeordneten ebenen Abschnitten besteht. Außerdem ist die Spanfläche eben und in unmittelbarer Nähe oder sogar genau auf der Mitte des Bohrkopfs positioniert. Das erleichtert nicht nur das Schleifen der Spanfläche, sondern auch das Schleifen einer konturierten Spitze des Bohrkopfs.

In vorteilhafter Ausgestaltung der Erfindung ist vorgesehen, dass der zweite Abschnitt auf Höhe der Spanfläche oder geringfügig höher als die Spanfläche liegt. Dann nämlich wird der äußere Teil des Spans hinter der Schneidkante nur leicht angehoben, was nur geringe Kräfte erfordert.

Erfindungsgemäß sind die beiden Abschnitte der Spanformfläche als nebeneinander verlaufende und ebene Flächen ausgebildet, was die Herstellung vereinfacht.

Es hat sich als vorteilhaft erwiesen, wenn der Abstand H₁ des ersten Abschnitts zur Spanfläche mehr als doppelt so groß ist wie der Abstand H₂ des zweiten Abschnitts zur Spanfläche. Ein Verhältnis von 4:1 hat sich als guter Kompromiss zwischen niedriger Schnittkraft beziehungsweise geringer Antriebsleistung und gleichzeitig hohen Umformkräften, die auf den Span wirken, erwiesen. Infolgedessen bricht der Span kurz und trotzdem ist die Gefahr einer Überlastung des Einlippen-Tieflochbohrers beziehungsweise des vorzeitigen Verschleißes minimiert.

Es hat sich weiter als vorteilhaft erwiesen, wenn der Spanwinkel der Spanfläche gleich 0° ist und die Spanfläche des Bohrkopfs durch dessen Drehachse oder geringfügig unter der Drehachse verläuft. In anderen Worten: Die Spanfläche kann auf oder geringfügig unterhalb der Mitte des Bohrkopfs angeordnet sein. Beispielsweise kann die Spanfläche bei einem Einlippen-Tieflochbohrer mit einem Bohrdurchmesser von 6 mm bis zu 2/100 mm unter der Mitte liegen. Im Vergleich zu Einlippen-Tieflochbohrern mit Spanbrecher liegt die Spanfläche bei dem erfindungsgemäßen Einlippen-Tieflochbohrer deutlich näher an bzw. in der Mitte.

Bei Einlippen-Tieflochbohrern mit Spanbrecher, wie sie aus dem Stand der Technik bekannt sind, liegt die Spanfläche an der Außenschneide deutlich unter der Mitte. Die Spanfläche an der Innenschneide liegt im Bereich der Drehachse auf der Mitte. Eine solche Schneidengeometrie ist meistens deutlich aufwändiger in der Herstellung und schwieriger nachzuschleifen als die erfindungsgemäße Schneidengeometrie.

Die Spitze des erfindungsgemäßen Einlippen-Tieflochbohrers kann in weiten Grenzen den Anforderungen des Kunden entsprechend gestaltet werden. Weil sich die Spanfläche in der Mitte oder nur geringfügig unterhalb der Mitte befindet, lassen sich kundenspezifische Geometrien des Grunds der Bohrung leicht und präzise realisieren. Die ist ein weiter Vorteil des erfindungsgemäßen Einlippen-Tieflochbohrers. Damit der Span leicht und ohne zu verklemmen über einen Absatz zwischen erstem Abschnitt und zweitem Abschnitt gleitet, ist ein Winkel W kleiner als 90° ausgeführt. Je kleiner der Winkel W, desto leichter gleitet der Span über diesen Absatz.

Es hat sich weiter als vorteilhaft erwiesen, wenn der erste Durchmesser D₁, der den Übergang zwischen erstem Abschnitt und zweitem Abschnitt festlegt, etwa gleich dem halben Durchmesser des Bohrkopfs ist. Bei dieser Unterteilung der Spanformfläche ist ein guter Kompromiss zwischen großer Umformarbeit des Spans bei gleichzeitig geringer Antriebsleistung erreicht worden.

In an sich bekannter Weise kann auch bei dem erfindungsgemäßen Einlippen-Tieflochbohrer an der Spanfläche ein Spanbrecher ausgebildet sein. Dieser Spanbrecher kann beispielsweise als kleine Fase ausgebildet sein, so dass das vordere Ende dieser Fase etwas unterhalb (ca. 1/100 mm bis 2/100 mm) der Mitte des Bohrkopfs positioniert ist.

In an sich bekannter Weise weist der erfindungsgemäße Einlippen-Tieflochbohrer einen Schaft auf, wobei die Sicke in dem Bohrkopf und mindestens teilweise in dem Schaft ausgebildet ist.

Der erfindungsgemäße Bohrkopf besteht vorteilhafterweise aus Hartmetall und ist bei Bedarf beschichtet. Der Schaft mit dem Einspannschaft kann auch aus Hartmetall bestehen; es handelt sich dann um ein Vollhartmetallwerkzeug. Alternativ können der Schaft mit der Sicke und eine Einspannhülse aus einem anderen Material, wie zum Beispiel Stahl, bestehen.
Weitere Vorteile und vorteilhafte Ausgestaltungen der Erfindung sind der nachfolgenden Zeichnung, deren Beschreibung und den (Schutz-) Ansprüchen entnehmbar.

### Zeichnung

Es zeigen:
- Figur 1: eine schematische Darstellung eines Einlippen-Tieflochbohrers,
- Figur 2: eine Ansicht von oben auf einen erfindungsgemäßen Bohrkopf,
- Figur 3: eine Ansicht von vorne auf einen erfindungsgemäßen Bohrkopf,
- Figur 4: die Ansicht gemäß Figur 2 mit weiteren Bemaßungen und
- Figur 5: die Ansicht gemäß Figur 3 mit weiteren Bemaßungen.

### Beschreibung des Ausführungsbeispiels

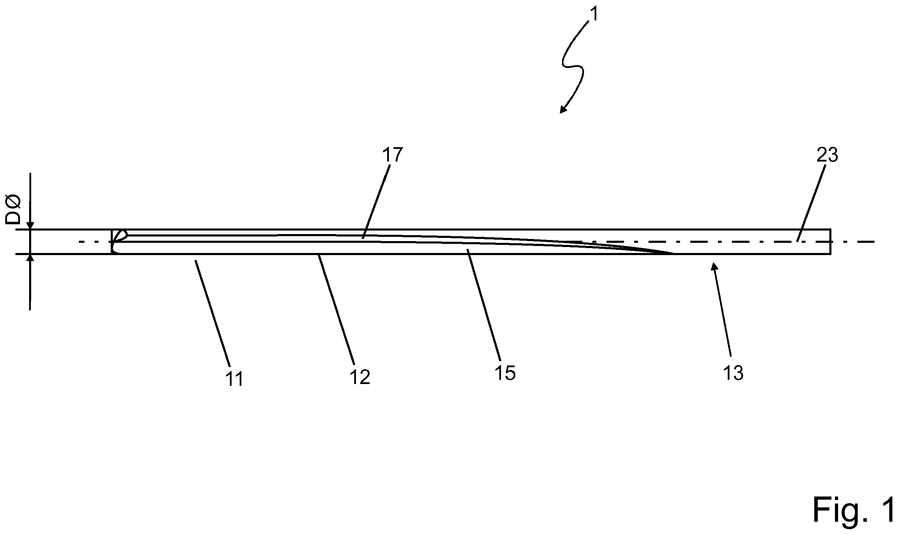

In der Figur 1 ist ein Einlippen-Tieflochbohrer 1 schematisch und etwas vereinfacht dargestellt. Der Einlippen-Tieflochbohrer 1 besteht aus einem Bohrkopf 11, einem Profilschaft 12 und einem Einspannschaft 13. Mit dem Einspannschaft 13 wird der Tieflochbohrer 1 in einer nicht dargestellten Tiefbohrmaschine aufgenommen. Der erfindungsgemäße Bohrkopf kann sowohl bei Vollhartmetallwerkzeugen als auch bei "gebauten" Werkzeugen bei denen Bohrkopf, ein Profilrohrschaft und eine Einspannhülse miteinander verlötet werden, eingesetzt werden.

Eine Drehachse beziehungsweise die Mitte des Bohrkopfs 11 hat das Bezugszeichen 23. In dem Bohrkopf 11 und dem Profilschaft 12 ist eine Sicke ausgebildet, die von einer Spanformfläche 15 und einer Wand 17 begrenzt wird.

Der erfindungsgemäße Tieflochbohrer 1 kann einen Bohrdurchmesser D von 6,1 mm haben und dazu dienen, eine Getriebewelle aus hochfestem Stahl auf einer Länge von 350 mm zu durchbohren. Diese Aufgabe ist fertigungstechnisch sehr anspruchsvoll, da hochfeste Stähle langspanend und zäh sind und darüber hinaus an die Geometrie (Durchmesser und Geradheit) der Bohrung hohe Anforderungen gestellt werden. Zudem ist die Prozesssicherheit und somit ein kurzer Span bei der automatisierten Bohrbearbeitung von höchster Wichtigkeit.

Um dies zu erreichen hat die erfindungsgemäße Spanformfläche 15 zwei Abschnitte 19 und 21. Ein erster Abschnitt 19 ist radial weiter innen angeordnet, während der zweite Abschnitt 21 radial weiter außen angeordnet ist.

An der Spitze des Bohrkopfs 11 ist ein Kühlschmiermittelkanal 24, der auch als "Niere" bezeichnet wird, sichtbar. Dieser Kühlschmiermittelkanal 24 erstreckt sich über die gesamte Länge des Tieflochbohrers 1 in an sich bekannter Weise. Über den Kühlschmiermittelkanal 24 wird Kühlschmiermittel an die Spitze des Tieflochbohrers 1 geführt. Das Kühlschmiermittel kühlt die Bohrerspitze und fördert gleichzeitig die von dem Bohrkopf 11 erzeugten Späne durch die Sicke 15 in Richtung der Einspannhülse 13.

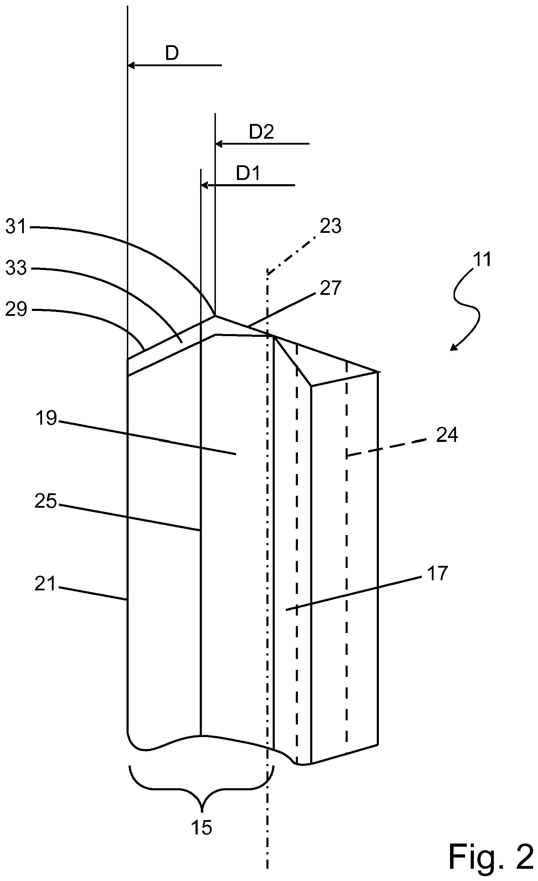

In der Figur 2 ist eine Ansicht von oben auf einen erfindungsgemäßen Bohrkopf schematisiert dargestellt. Die Mitte des Bohrkopfs beziehungsweise die Drehachse des Bohrkopfs 11 ist mit dem Bezugszeichen 23 versehen.

Die Sicke wird, wie bereits erwähnt, von einer Wand 17 und der zweiteiligen Spanformfläche 15 begrenzt. Die beiden Abschnitte der Spanformfläche 15 (siehe Figur 1) tragen die Bezugszeichen 19 und 21. Mit 19 ist der erste Abschnitt bezeichnet, der radial weiter innen angeordnet ist. Mit 21 wird der zweite Abschnitt bezeichnet, der in radialer Richtung außen an den ersten Abschnitt 19 anschließt.

In an sich bekannter Weise setzt sich die Schneide des Bohrkopfs 11 aus einer Innenschneide 27 und einer Außenschneide 29, die an ihrem Schnittpunkt eine Drehspitze 31 bilden. Die erfindungsgemäße Geometrie des Bohrkopfs ist unabhängig von der Form der Spitze des Bohrkopfs.

Bei dem exemplarisch dargestellten Ausführungsbeispiel verläuft die Außenschneide 29 unter einem Winkel von 30° zu einer Orthogonalen zu der Drehachse 23. Die Innenschneide 29 verläuft unter einem Winkel von 20° zu einer Orthogonalen zu der Drehachse 23. Kurz gesagt: Es handelt sich im Beispiel um einen 30/20 Anschliff.

Zwischen der Innenschneide 27 und der Außenschneide 29 ist eine Schneidenspitze 31 ausgebildet, die außermittig zur Drehachse 23 positioniert ist. Der Durchmesser auf dem die Schneidenspitze 31 umläuft, wenn der erfindungsgemäße Bohrkopf 11 sich um die Drehachse 23 dreht, ist in der Figur 2 mit D₂ bezeichnet.

Der Absatz zwischen dem ersten Abschnitt 19 und dem zweiten Abschnitt 21 der Spanformfläche 15 bewegt sich auf einer kreisförmigen Bahn um die Drehachse 23, wenn der Bohrkopf 11 in Drehung versetzt wird. Dieser Durchmesser ist in der Figur 2 mit D₁ bezeichnet.

Die Schneidenspitze 32 ist bei diesem Ausführungsbeispiel auf einem kleineren Durchmesser angeordnet als der Absatz zwischen erstem Abschnitt 19 und zweitem Abschnitt 21. Das muss nicht so sein. Es kann auch sein, dass der Bohrkopf 11 keine ausgeprägte Spitze aufweist.

Die gemeinsame Spanfläche 33 von Innenschneide 27 und Außenschneide 29 hat das Bezugszeichen 33. Sie befindet sich auf einer Ebene, die entweder durch oder geringfügig unterhalb der Drehachse 23 des Bohrkopfs 11 verläuft. Der Abstand zwischen Spanfläche 33 und Drehachse 23 muss so klein sein, dass in der Mitte der Bohrung kein Zapfen stehen bleibt.

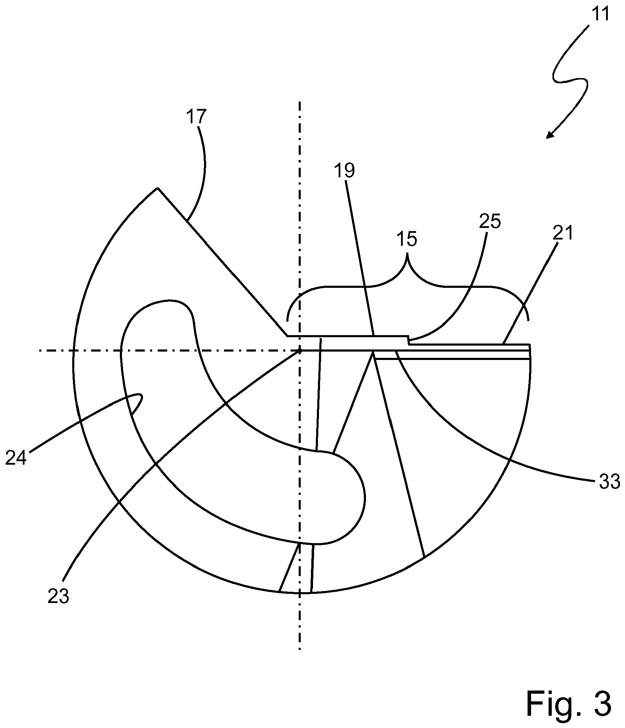

In der Figur 3 wird nun eine Ansicht von vorne auf den erfindungsgemäßen Bohrkopf 11 dargestellt. Gleiche Bauteile werden mit den gleichen Bezugszeichen versehen.

Die Mitte des Bohrkopfs 11 beziehungsweise die Drehachse ist in der Figur 3 als Punkt mit dem Bezugszeichen 23 dargestellt. Gut zu erkennen in dieser Ansicht von vorne sind der Kühlschmiermittelkanal 24, die Wand 17 sowie die abgesetzte Spanformfläche 15 mit den Abschnitten 19 und 21.

In der Figur 3 ist gut zu erkennen, dass die ebene Spanfläche 33 etwa durch die Mitte beziehungsweise die Drehachse 23 des Bohrkopfs 11 verläuft. Die Spanfläche 33 kann genau durch die Drehachse 23 oder geringfügig unterhalb der Drehachse 23 verlaufen. Bei einem Bohrdurchmesser von 6,1 mm kann die Spanfläche 33 bis zu 2/100 mm unterhalb der Drehachse 23 verlaufen.

Des Weiteren ist gut zu erkennen, dass, ausgehend von der Spanfläche 33, die Abschnitte 19 und 21 der Spanformfläche 15 unterschiedlich hoch sind. Der radial innen angeordnete erste Abschnitt 19 ist deutlich höher als der zweite Abschnitt 21. Aus dieser Höhendifferenz ergibt sich ein Absatz 25 zwischen den beiden Abschnitten 19 und 21.

Des Weiteren ist aus der Zusammenschau der Figuren 2 und 3 gut zu erkennen, dass die Spitze des Bohrkopfs inklusive der Sicke mit der Wand 17 und der abgesetzten Spanformfläche 15 ausschließlich ebene Flächen aufweist, die durch Schleifen einfach und mit sehr hoher Wiederholgenauigkeit herstellbar sind. In anderen Worten: Der erfindungsgemäße Bohrkopf 11 lässt sich nicht nur gut und prozesssicher herstellen, sondern auch relativ einfach mit gleichbleibend hoher Qualität nachschleifen. Dies ist besonders wichtig, wenn das Nachschleifen nicht beim Hersteller, sondern beim Anwender des Tieflochbohrers stattfindet, da dort in der Regel nur relativ einfache Schleifeinrichtungen zur Verfügung stehen.

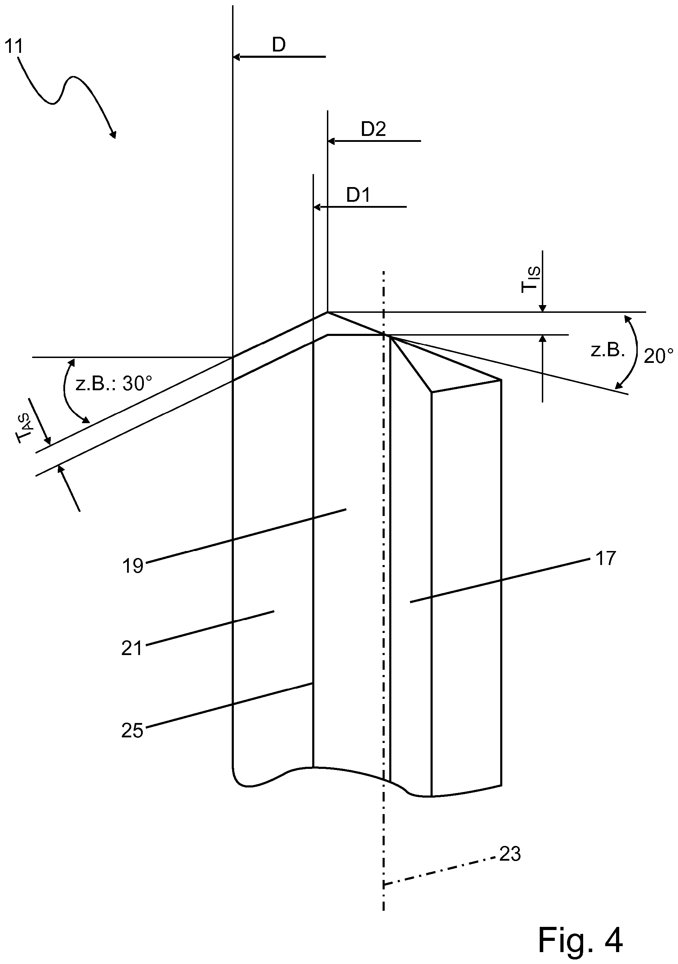

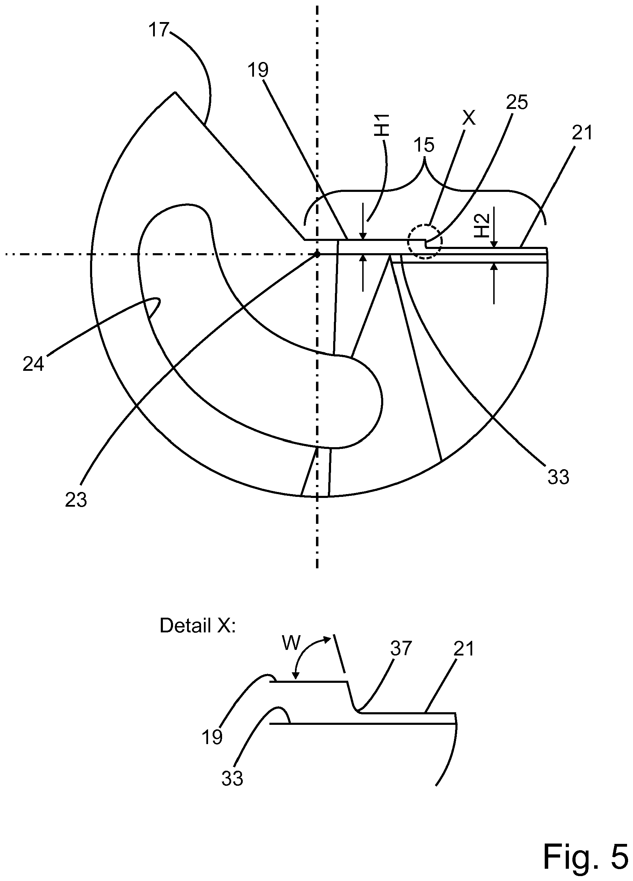

Die Figuren 4 und 5 entsprechen den Figuren 2 und 3. Allerdings sind in den Figuren 4 und 5 mehr Maßhilfslinien und Maße eingetragen, wodurch die Übersichtlichkeit etwas leidet.

Die in den Figuren 4 und 5 eingetragenen Maße sind im Wesentlichen selbsterklärend. Für einen erfindungsgemäßen Tieflochbohrer mit einem Bohrdurchmesser von 6,1 mm, der zum Einbringen einer Bohrung in eine Getriebewelle aus hochfestem Stahl vorgesehen ist, haben sich folgende Werte bewährt:
Spanwinkel γ: 0°
Spanfläche 33: auf oder geringfügig unterhalb der Mitte
D₁: 3 mm
Länge der Spanfläche an der Außenschneide T_{AS}: 0,8 mm Länge der Spanfläche an der Innenschneide T_{IS}: 0,8 mm
H₁ (Abstand zwischen Spanfläche 33 bzw. Drehachse 23 und erstem Abschnitt 19 der Spanformfläche 15): 0,2 mm H₂ (Abstand zwischen Spanfläche 33 und zweitem Abschnitt 21 der Spanformfläche 15): 0,05 mm
Radius 37 am Übergang zwischen den Abschnitten 19 und 21 der Spanformfläche: 0,05 mm
W Winkel an dem Absatz 25 zwischen den Abschnitten 19 und 21 der Spanformfläche: 80°

Bei anderen Bohrungsdurchmessern können diese Werte entsprechend angepasst werden.

## Patentansprüche

1. Einlippen-Tieflochbohrer umfassend einen Bohrkopf (11), wobei der Bohrkopf (11) eine Drehachse (23), einen Bohrdurchmesser (D), eine Schneide und eine Sicke zur Spanabfuhr aufweist, wobei sich die Schneide von der oder etwa von der Drehachse (23) nach außen bis zur Peripherie des Bohrkopfs (11) erstreckt, wobei die Schneide eine ebene Spanfläche (33) aufweist und wobei die Sicke durch eine Spanformfläche (15) und eine Wand (17) begrenzt wird, **dadurch gekennzeichnet, dass** die Spanformfläche (15) bezogen auf die Spanfläche (33) zwei unterschiedliche als Plateaus und als ebene Flächen ausgebildete Abschnitte (19, 21) aufweist, dass ein erster Abschnitt (19) der Spanformfläche (15) radial innen und in unmittelbarer Nähe der Drehachse (23) liegt, dass ein zweiter Abschnitt (21) der Spanformfläche (15) radial außen liegt und an den ersten Abschnitt (19) anschließt, , dass der erste Abschnitt (19) der Spanformfläche (15) und die Wand (17) der Sicke direkt ineinander übergehen, dass der erste Abschnitt (19) in einer Ansicht von vorne auf den Bohrkopf (11) über der Spanfläche (33) liegt, und dass der zweite Abschnitt (21) in einer Ansicht von vorne auf den Bohrkopf (11) näher an der Spanfläche (33) als der erste Abschnitt (19) liegt.

2. Einlippen-Tieflochbohrer nach Anspruch 1, **dadurch gekennzeichnet, dass** der zweite Abschnitt (21) auf gleicher Höhe oder geringfügig höher (H₂) als die Spanfläche (33) liegt.

3. Einlippen-Tieflochbohrer nach einem der vorhergehenden Ansprüche, **dadurch gekennzeichnet, dass** der erste Abschnitt (19) mindestens doppelt so weit, bevorzugt aber etwa viermal so weit über der Spanfläche (33) liegt wie der zweite Abschnitt (21). (H₁ ≥ 2 · H₂)

4. Einlippen-Tieflochbohrer nach Anspruch 1 oder 2, **dadurch gekennzeichnet, dass** die Drehachse (23) des Bohrkopfs (11) annähernd durch eine Spanfläche (33) verläuft.

5. Einlippen-Tieflochbohrer nach einem der vorhergehenden Ansprüche, **dadurch gekennzeichnet, dass** der Winkel W an einem Absatz (25) zwischen den Abschnitten (19) und (21) der Spanformfläche (15) einen Wert zwischen 55° und 90° hat.

6. Einlippen-Tieflochbohrer nach einem der vorhergehenden Ansprüche, **dadurch gekennzeichnet, dass** der erste Durchmesser (D₁) etwa gleich dem halben Durchmesser (D) des Bohrkopfs (11) ist (D₁ ≈ D/2).

7. Einlippen-Tieflochbohrer nach einem der vorhergehenden Ansprüche, **dadurch gekennzeichnet, dass** an der Spanfläche (33) ein Spanbrecher mit einem positiven Spanwinkel ausgebildet ist.

8. Einlippen-Tieflochbohrer nach einem der vorhergehenden Ansprüche, **dadurch gekennzeichnet, dass** er einen Einspannschaft (13) und/oder einen Schaft (12) umfasst, und dass die Sicke in dem Bohrkopf (11) und mindestens teilweise in dem Schaft (12) ausgebildet ist.

9. Einlippen-Tieflochbohrer nach einem der vorhergehenden Ansprüche, **dadurch gekennzeichnet, dass** zumindest der Bohrkopf (11) aus Hartmetall besteht.

10. Einlippen-Tieflochbohrer nach einem der vorhergehenden Ansprüche, **dadurch gekennzeichnet, dass** er mindestens eine Führungsleiste aufweist.

11. Einlippen-Tieflochbohrer nach einem der vorhergehenden Ansprüche, **dadurch gekennzeichnet, dass** sowohl der Bohrkopf (11) als auch der Schaft (12) aus Hartmetall besteht.

12. Einlippen-Tieflochbohrer nach einem der vorhergehenden Ansprüche, **dadurch gekennzeichnet, dass** der Bohrkopf (11) ganz oder teilweise mit einer Hartstoffbeschichtung versehen ist.

## Claims

1. Single-lip deep-hole drill comprising a drill head (11), the drill head (11) having a rotation axis (23), a drill diameter (D), a cutting edge and a bead for removing chips, the cutting edge extending from or approximately from the rotation axis (23) outward as far as the periphery of the drill head (11), the cutting edge having an even rake face (33) and the bead being delimited by a chip forming surface (15) and a wall (17), **characterized in that** the chip forming surface (15), with respect to the rake face (33), has two different portions (19, 21) designed as plateaus and as flat surfaces, **in that** a first portion (19) of the chip forming surface (15) is positioned radially inward and in immediate proximity to the rotation axis (23), **in that** a second portion (21) of the chip forming surface (15) is positioned radially outward and adjoins the first portion (19), **in that** the first portion (19) of the chip forming surface (15) and the wall (17) of the bead merge directly into one another, **in that** the first portion (19), when the drill head (11) is viewed from the front, is positioned over the rake face (33), and **in that** the second portion (21), when the drill head (11) is viewed from the front, is closer to the rake face (33) than the first portion (19).

2. Single-lip deep-hole drill according to claim 1, **characterized in that** the second portion (21) is at the same height as or is slightly higher (H₂) than the rake face (33).

3. Single-lip deep-hole drill according to one of the preceding claims, **characterized in that** the first portion (19) is at least twice as far, but preferably approximately four times as far, above the rake face (33) as the second portion (21). (H₁ ≥ 2 • H₂).

4. Single-lip deep-hole drill according to claim 1 or claim 2, **characterized in that** the rotation axis (23) of the drill head (11) extends approximately through a rake face (33).

5. Single-lip deep-hole drill according to any of the preceding claims, **characterized in that** the angle W has a value between 55° and 90° at a step (25) between the portions (19) and (21) of the chip forming surface (15).

6. Single-lip deep-hole drill according to any of the preceding claims, **characterized in that** the first diameter (D₁) is approximately equal to half the diameter (D) of the drill head (11) (D₁ ≈ D/2).

7. Single-lip deep-hole drill according to any of the preceding claims, **characterized in that** a chip breaker having a positive rake angle is formed on the rake face (33).

8. Single-lip deep-hole drill according to any of the preceding claims, **characterized in that** it comprises a clamping shaft (13) and/or a shaft (12), and **in that** the bead is formed in the drill head (11) and at least in part in the shaft (12).

9. Single-lip deep-hole drill according to any of the preceding claims, **characterized in that** at least the drill head (11) consists of cemented carbide.

10. Single-lip deep-hole drill according to any of the preceding claims, **characterized in that** it has at least one guide rail.

11. Single-lip deep-hole drill according to any of the preceding claims, **characterized in that** the drill head (11) and the shaft (12) consist of cemented carbide.

12. Single-lip deep-hole drill according to any of the preceding claims, **characterized in that** the drill head (11) is provided in whole or in part with a hard-material coating.

## Revendications

1. Foret mono-lèvre pour trou profond comprenant une tête de forage (11), dans lequel la tête de forage (11) présente un axe de rotation (23), un diamètre de forage (D), un tranchant et une nervure d'élimination de copeaux, dans lequel le tranchant s'étend à partir de ou des environs de l'axe de rotation (23) vers l'extérieur jusqu'à la périphérie de la tête de forage (11), dans lequel le tranchant présente une face de coupe plane (33) et dans lequel la nervure est délimité par une surface de formation de copeaux (15) et une paroi (17), **caractérisé en ce que** la surface de formation de copeaux (15) présente par rapport à la surface de coupe (33) deux tronçons différents (19, 21) conçus sous forme de plateaux et de surfaces planes, **en ce qu'**un premier tronçon (19) de la surface de formation de copeaux (15) se trouve radialement à l'intérieur et au voisinage immédiat de l'axe de rotation (23), **en ce qu'**un second tronçon (21) de la surface de formation de copeaux (15) se trouve radialement à l'extérieur et est relié au premier tronçon (19), **en ce que** le premier tronçon (19) de la surface de formation de copeaux (15) et la paroi (17) de la nervure se fondent directement l'un dans l'autre, **en ce que** le premier tronçon (19) se trouve, dans une vue de face de la tête de forage (11), au-dessus de la face de coupe (33), et **en ce que** le second tronçon (21), dans une vue de face de la tête de forage (11), se trouve plus proche de la face de coupe (33) que le premier tronçon (19).

2. Foret mono-lèvre pour trou profond selon la revendication 1, **caractérisé en ce que** le second tronçon (21) est à la même hauteur ou légèrement plus haut (H₂) que la face de coupe (33).

3. Foret mono-lèvre pour trou profond selon l'une des revendications précédentes, **caractérisé en ce que** le premier tronçon (19) se trouve au moins deux fois plus loin, mais de préférence environ quatre fois plus loin au-dessus de la surface de coupe (33) que le second tronçon (21). (H₁ ≥ 2 • H₂).

4. Foret mono-lèvre pour trou profond selon la revendication 1 ou 2, **caractérisé en ce que** l'axe de rotation (23) de la tête de forage (11) s'étend approximativement à travers une surface de coupe (33).

5. Foret mono-lèvre pour trou profond selon l'une quelconque des revendications précédentes, caractérisé l'angle W au niveau d'un gradin (25) entre les tronçons (19) et (21) de la surface de formation de copeaux (15) a une valeur comprise entre 55° et 90°.

6. Foret mono-lèvre pour trou profond selon l'une quelconque des revendications précédentes, caractérisé le premier diamètre (D₁) est approximativement égal à la moitié du diamètre (D) de la tête de forage (11) (D₁≈D/2).

7. Foret mono-lèvre pour trou profond selon l'une quelconque des revendications précédentes, **caractérisé en ce qu'**un brise-copeaux avec un angle de coupe positif est formé sur la surface de coupe (33).

8. Foret mono-lèvre pour trou profond selon l'une quelconque des revendications précédentes, **caractérisé en ce qu'**il comprend une tige de serrage (13) et/ou une tige (12), et **en ce que** la nervure est formée dans la tête de forage (11) et au moins partiellement dans la tige (12).

9. Foret mono-lèvre pour trou profond selon l'une quelconque des revendications précédentes, caractérisé qu'au moins la tête de forage (11) est en un métal dur.

10. Foret mono-lèvre pour trou profond selon l'une quelconque des revendications précédentes, **caractérisé en ce qu'**il présente au moins un rail de guidage.

11. Foret mono-lèvre pour trou profond selon l'une quelconque des revendications précédentes, caractérisé que la tête de forage (11) et la tige (12) sont en un métal dur.

12. Foret mono-lèvre pour trou profond selon l'une quelconque des revendications précédentes, **caractérisé en ce que** la tête de forage (11) est prévue complètement ou partiellement avec un revêtement dur.
